# EUROPEAN PATENT SPECIFICATION

(11) **EP 3 549 833 B1**
(45) Date of publication and mention of the grant of the patent: **09.06.2021**
(21) Application number: 18165876.6
(22) Date of filing: 05.04.2018
(51) Int. Cl.: B60R 22/46

(54) **REVERSIBLE SEAT BELT TENSIONER**
REVERSIBLER SITZGURTSTRAFFER
TENDEUR DE CEINTURE DE SÉCURITÉ RÉVERSIBLE

(43) Date of publication of application: 09.10.2019
(73) Proprietor: ZF Automotive Germany GmbH, 73553 Alfdorf (DE)
(72) Inventor: Singh, Yashwanth, 73525 Schwäbisch Gmünd (DE)
(74) Representative: ZF Patentabteilung - DIPS

(56) References cited:
- WO-A1-2011/059010
- DE-A1- 19 852 377

## Description

The invention relates to a reversible seat belt tensioner of a seat belt system in a vehicle.

Reversible seat belt tensioners are used to increase the safety of the vehicle occupants and their driving comfort. A reversible drive, usually an electric motor, is coupled with the seat belt spool axis when needed, to rotate the seat belt spool of a seat belt retractor and to take in loose seat belt webbing. A reversible drive is activated for instance in situations in which a control unit decides that this could be potentially beneficial. In this case, a clutch is closed that couples the reversible drive with the seat belt spool, and the seat belt spool is rotated by the reversible drive to draw in seat belt webbing. In the regular operating mode of the seat belt system and the seat belt retractor, the clutch is open so that the seat belt spool can draw in and give out seat belt webbing without being hindered by the reversible drive. An example for a reversible seat belt tensioner according to the preamble of claim 1 is shown in DE 10 2011 119 343 A1.

Additionally to the reversible drive, the seat belt tensioner usually is provided with a single-use pyrotechnic drive that will only be activated in case of an actual crash situation. The seat belt spool is rotated by the pyrotechnic drive with a far higher rotational velocity than by reversible drive, but in the same direction. So as not to interfere with the pyrotechnic drive and also to prevent any interference with a subsequent load limiting function of the seat belt system that reduces the force acting on the occupant after the pyrotechnic drive has finished its operation, the clutch usually is opened and the reversible drive disengaged from the seat belt spool when the pyrotechnic drive is activated.

The reversible drive may be able to rotate a driving element, for instance a gear acting between the reversible drive and the clutch, in a driving direction and in a reversed releasing direction. The driving gear can be reversibly coupled to the seat belt spool by the clutch. However, the seat belt spool usually is coupled to the pyrotechnic drive in a way that the seat belt spool is set into rotation as soon as the pyrotechnic drive will be activated.

Commonly, the seat belt spool, the clutch as well as the reversible drive and the pyrotechnic drive are mounted on a frame of the seat belt retractor.

The normal operation of the clutch, i.e. the motion of certain clutch components during closing and opening of the clutch so that the reversible drive may pretension the seat belt when required, occurs during the regular operation of the vehicle, contrary to the activation of the pyrotechnic drive which is only effected in an actual crash situation.

It is an object of the invention to provide a reliable clutch that can be manufactured at little expense.

This object is achieved with a reversible seat belt tensioner having the features of claim 1. The reversible seat belt tensioner in a vehicle comprises a reversible drive and a clutch. The clutch has a first drive element connected to the first drive and adapted for being rotated in a driving direction and in a releasing direction as well as at least one pawl arranged at a face side of the seat belt spool, the pawl being configured to engage a clutch-side toothing on the first drive element to couple the seat belt spool with the first drive element. The pawl is configured to assume a disengaged position in which the pawl is not in engagement with the clutch-side toothing on the first drive element and an engaged position in which the pawl is in engagement with the clutch-side toothing. A second drive element is provided that is configured to interact with the pawl so that a motion of the second drive element moves the pawl from its disengaged position into its engaged position. The second drive element is moveable independently of a rotation of the first drive element. According to the invention, the closing of the clutch can be achieved independently of the tensioning of the seat belt webbing, as the clutch need not be closed by translating the rotation of the first drive element into an engagement motion of the pawl, as is the case with prior art clutches. Instead, the motion of the second drive element is used, which may be independent of the motion of the first drive element.

The drive for closing the clutch, therefore, may differ from that used to rotate the seat belt spool for tensioning the seat belt webbing. Preferably, the second element is coupled to a different second drive, the first and the second drive being configured so that they can be activated independently of each other. Therefore, the clutch activation can be better controlled, for instance with regard to engagement time, decoupling time and behavior in crash situations.

The first drive is the reversible drive usually used in prior art seat belt tensioners that provides the rotational force to draw in and tension seat belt webbing.

The first drive element can be connected with the first drive by a drive-side toothing in contact with a gearing mechanism between the first drive and the first drive element.

In a preferred embodiment, the second drive element is rotated in driving direction to move the pawl from its disengaged position into its engaged position so that first and second driving element rotate in the same direction when the seat belt webbing is to be tensioned.

The first and the second drive element can be arranged coaxially with each other and also coaxially with the seat belt spool axis so that the seat belt spool axis forms a common rotation axis.

It is possible to arrange the second drive coaxially with the seat belt spool axis.

The second drive preferably is used only to close the clutch, in particular to move the pawl from its disengaged position into its engaged position.

Both the first and the second drive preferably are electric motors, as an electric motor is small, inexpensive, multi-usable and can be mounted together with the clutch on the seat belt retractor frame and reaches a high rotation frequency in a very short time and can also be switched off very fast.

Advantageously, the pawl has only to be moved over a short path from its disengaged into its engaged position. Also, the second drive element preferably has only to be moved over a limited path. In particular, a rotation of the second drive element of about 5° to 30° may be sufficient to move the pawl from its disengaged into its engaged position.

Therefore, any actuator can be used as the second drive that can provide for instance a 5° to 30° rotation of the second drive element in a sufficiently short time and with a high enough force to move the pawl from its disengaged into its engaged position.

The connection between the second drive element and the second drive should be configured so that the second drive element can be entrained with the rotating seat belt spool without any resistance to the rotation around the common rotation axis when the second drive is inactive. For instance, a friction clutch might be provided between the second drive and the second drive element.

The pawl preferably is pivotally arranged on the face of the seat belt spool to pivot around a pivot axis.

When two or more pawls are used, they should be distributed at equal distances along the circumference of the seat belt spool face.

Preferably, a design with two pawls is used, where the two pawls are arranged on a diameter through the seat belt spool axis and are designed identically.

The engagement between the pawl and the clutch-side toothing occurs for instance between a tip of the pawl on the free end of the pawl and a single tooth of the clutch-side toothing of the first drive element.

When the pawl is engaged, preferably, the second drive is turned off and only the first drive stays active and rotates the seat belt spool to take up the seat belt webbing.

The synchronization between the first and the second drive preferably is chosen so that the portion of the pawl that engages the clutch-side toothing reaches its radially most outwards position that corresponds to the engaged position of the pawl between two adjacent teeth of the clutch-side toothing of the first drive element.

Preferably, the pawl is coupled with a spring attached to the seat belt spool, the spring urging the pawl towards its disengaged position. Due to this design, the pawl can be moved back from its engaged position into its disengaged position as soon as it loses its engagement with the first drive element. No complicated mechanism for returning the pawl into its disengaged position has to be provided.

The spring force should be chosen higher than the gravitational force acting on the pawl and, preferably, also higher than a centrifugal force acting on the pawl when the seat belt spool rotates during the normal operation of the seat beat system, giving out and pulling in seat belt webbing. The spring then serves to keep the pawl in its defined disengaged position as long as the second drive is not activated.

When a design including two or more pawls arranged on the seat belt spool face is used, the springs acting on the pawls help to reduce the differences in pawl engagement due to the effect of the gravitational force.

It is advantageously to attach the spring directly to the pawl. In this case, the spring may be attached at the pawl in the region of a free end of the pawl that is moved radially outwards when the pawl is moved into its engaged position. Accordingly, the spring exerts a high force on the pawl to keep the pawl in its disengaged position which allows to use small dimensioned springs. Also, the pawl will be pulled back into its disengaged position with high accuracy.

To keep the clutch securely closed as long as the seat belt tensioning process is going on, the contact between the tip of the pawl and the tooth of the clutch-side toothing of the first drive element should have the form of an undercut so that the pawl cannot be pivoted back by spring force alone as long as a load is transferred from the first drive element to the seat belt spool through the pawl.

Only when the clutch is actively disengaged by a relative rotation between the first drive element and the pawl and the pawl loses contact with the clutch-side toothing, the pawl is pulled back into its disengaged position by the spring force alone. The second drive is not necessary for disengaging the clutch.

Usually, the first drive element is a gear having a drive-side toothing for rotating the first drive element in driving direction and in releasing direction. The drive-side toothing is coupled to the first drive that can rotate in either driving or releasing direction.

The first drive element may have a central opening, the clutch-side toothing being provided at a radial inner side of the opening and lying in one plane with the pawl so that the pawl directly engages the clutch-side toothing when it is moved in its engaged position.

When the clutch is in its closed state, preferably the second drive element rotates together with the seat belt spool and the first drive element when the first drive element is rotated in driving direction and the pawl is in its engaged position.

Preferably, the second drive element is permanently coupled to the pawl or the face of the seat belt spool and is entrained by the pawl also during the normal operation of the seat belt retractor when the seat belt spool turns to take up or give out seat belt webbing.

During the normal operation of the seat belt retractor, the spring preferably keeps the second drive element in its intended starting position.

No force is exerted on the second drive element by the second drive during the normal operation of the seat belt retractor. The second drive is not in operation in these situations. The only situation where the second drive element rotates relative to the face of the seat belt spool is when the second drive is active.

In a preferred embodiment, the second drive element has a pawl interaction portion that is configured to contact the pawl to move the pawl into its engaged position. In its starting position, the second drive element is in contact with the pawl by this pawl interaction portion.

Further, preferably the second drive element has a synchronization portion that is configured to contact the pawl or the seat belt spool when the pawl is in its engaged position to keep the pawl and the second drive element in a predetermined relative angular position. By this, the second drive element can easily be brought back into its starting position so that for a renewed activation of the clutch the second drive element is in a defined relative position to the pawl and the engagement process stays synchronized with the rotation of the first drive element and its clutch-side toothing.

Also, the synchronization portion can be used to entrain the second drive element with the seat belt spool.

The pawl interaction portion may be a first projection extending radially outwards from the common rotation axis on the second drive element that is in abutment with the pawl and that pushes the pawl radially outwards when the second drive is activated.

The synchronization portion may be realized as a second projection extending radially outwards from the common rotation axis on the second drive element that interacts with an abutment on the seat belt spool face when the second drive element has rotated for a predetermined angle relative to the pawl. Once the second drive element has reached the abutment, the second drive element is entrained by the seat belt spool and rotates together with the seat belt spool.

In a preferred embodiment, the first and second projection on the second drive element are combined into one protrusion extending radially outwards from the common rotation axis on which both the pawl interaction portion and the synchronization portion are formed.

The pawl has for instance a pocket or a recess in which the protrusion is arranged so that the protrusion can push the pawl into its engaged position and the protrusion will be entrained by the pawl when the spring pulls the pawl back into its disengaged position. The pocket or recess should be designed so that the protrusion can slide in radial direction relative to the pawl when the pawl moves from its disengaged into its engaged position and back.

The pawl interaction portion on the second drive element may be configured so that the second drive element rotates about an angle of 5° to 30° around its rotation axis to move the pawl from its disengaged position into its engaged position.

In the following, an example for operating the clutch is described.

To close the clutch, the second drive element is moved relative to the pawl by the second drive and moves the pawl from its disengaged position into its engaged position. The first and second drive are synchronized such that the pawl reaches its engaged position with its tip between two adjacent teeth of the clutch-side toothing of the first drive element. The first drive element starts to turn in driving direction, and the nearest tooth of the clutch-side toothing comes into engagement with the pawl and entrains the pawl and, therefore, the seat belt spool. The clutch is closed.

The second drive is switched off, and the second drive element is entrained with the seat belt spool and rotates together therewith. In this situation, the seat belt webbing is tensioned by the first drive alone.

When the critical driving situation passes without an actual crash situation developing, the clutch is opened again. To open the clutch, the first drive element is rotated in releasing direction opposite the driving direction so that the tooth of the clutch-side toothing that the pawl engages is rotated away from the pawl. The pawl is pulled back into its disengaged position, preferably by force of the spring alone. The second drive element assumes once again its starting position.

The clutch may be closed again for a further seat belt tensioning.

If, however, the critical driving situation proves to be more severe and the pyrotechnic drive is activated while the clutch is closed, the seat belt spool is rotated in driving direction faster than the rotation of the first drive element. This leads to the tip of the pawl losing contact with the tooth of the clutch-side toothing it has engaged. The pawl is moved back into its disengaged position preferably by force of the spring alone. The clutch is thus disengaged from the first drive element and the seat belt spool is rotated exclusively by the pyrotechnic drive.

All features of the invention described in this application, also with regard to different embodiments, may be realized independently of each other and in any combination deemed suitable by a person skilled in the art.

In the following, the invention will be described in detail on basis of two preferred embodiments and with regard to the enclosed drawings. In the drawings:
- Figure 1 shows a schematic perspective view of a clutch according to the invention, in an assembly with a seat belt spool and a first and a second drive;
- Figure 2 shows a plan view of the assembly shown in Figure 1;
- Figure 3 shows a schematic plan view of the clutch according to a first embodiment of the invention where the pawl is in its disengaged position;
- Figures 4 to 6 show the clutch of Figure 3 during the engagement process;
- Figure 7 shows the clutch of Figure 3 during the disengagement process;
- Figure 8 shows a schematic plan view of a clutch according to a second embodiment of the invention with the pawl in its disengaged position;
- Figure 9 shows the pawl of the clutch of Figure 8 in a schematic perspective view; and
- Figures 10 and 11 show the clutch of Figure 8 during the engagement process.

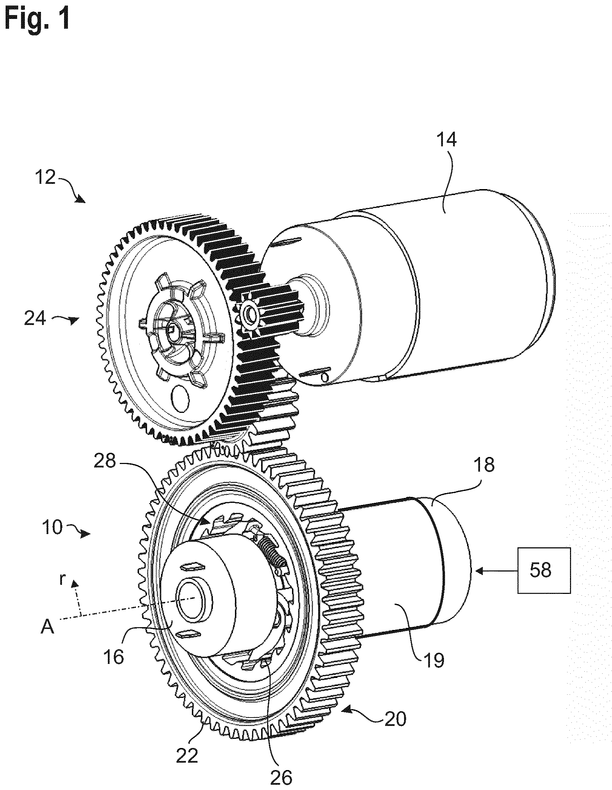

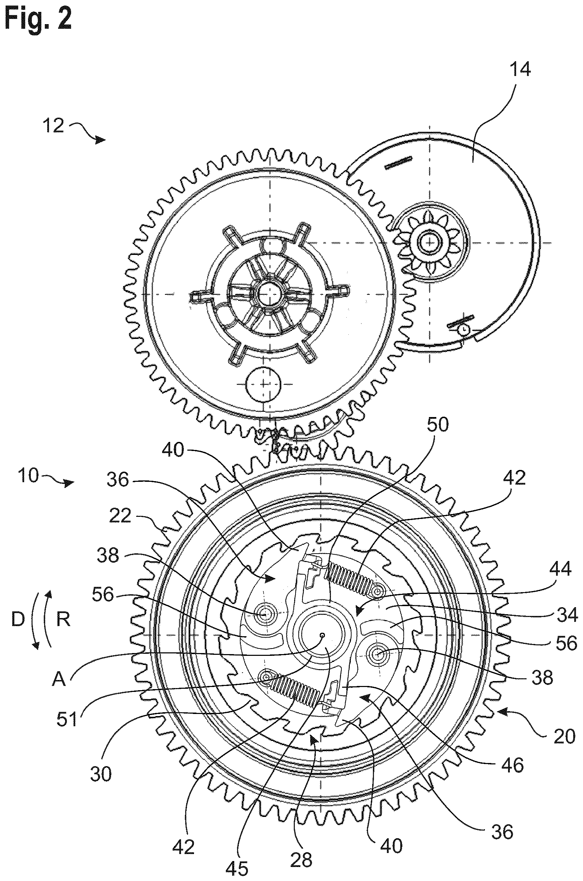

The Figures show a clutch 10 for a seat belt tensioner (not depicted in detail). Figures 1 and 2 show the clutch 10 in an assembly 12 with a first drive 14 and a second drive 16, each coupled to the clutch 10.

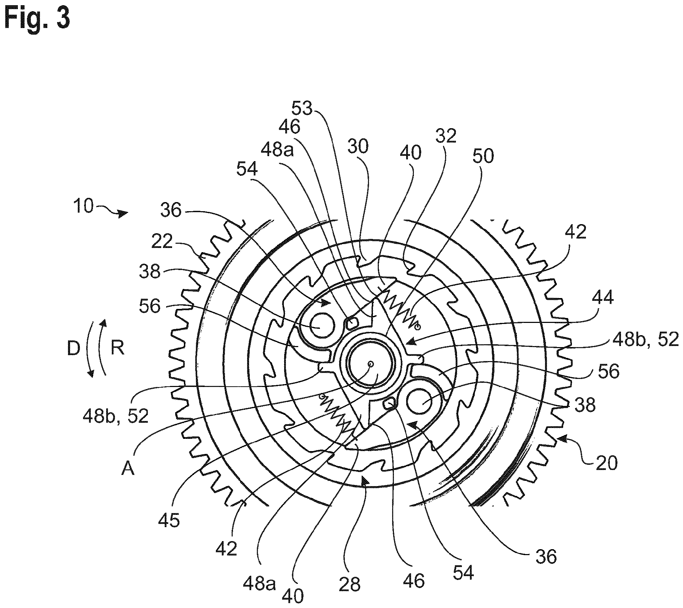

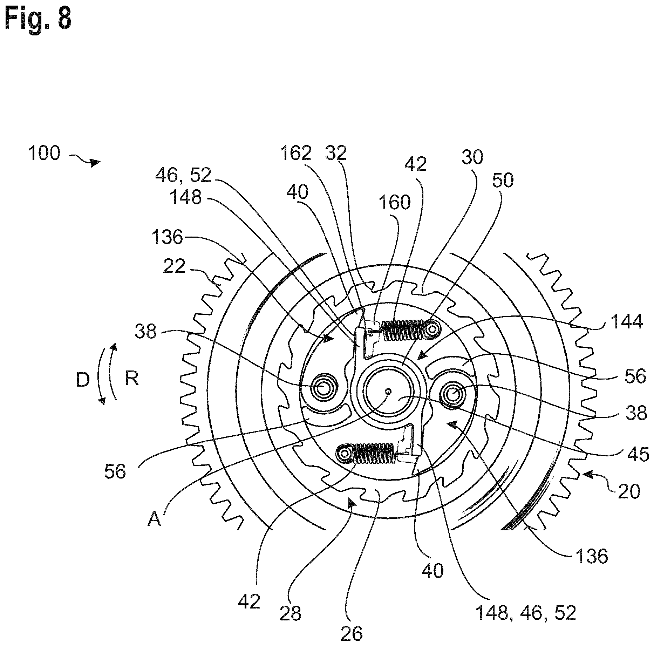

Figures 3 to 7 relate to a first embodiment of the clutch, while Figures 8 to 11 relate to a second embodiment. However, the assembly shown in Figures 1 and 2 is generic for all embodiments of the invention.

The clutch 10 can assume two states, a closed state and an open state. In its closed state the clutch 10 effects a force transmission from the reversible first drive 14 to a seat belt spool 18 on which a seat belt webbing 19 of a safety belt system of the vehicle is rolled up (only schematically in Figure 1).

The clutch 10 comprises a first drive element 20 that interacts with a gear assembly 24 to connect the first drive element 20 to the first drive 14. In this example, the first drive element 20 is realized as a gear having an outer drive-side toothing 22 engaged with the gear assembly 24. The first drive 14 can rotate the first drive element 20 in a driving direction D and an opposite releasing direction R by the first drive 14.

The first drive element 20 is arranged coaxially with an axis of the seat belt spool 18 that forms a common rotation axis A.

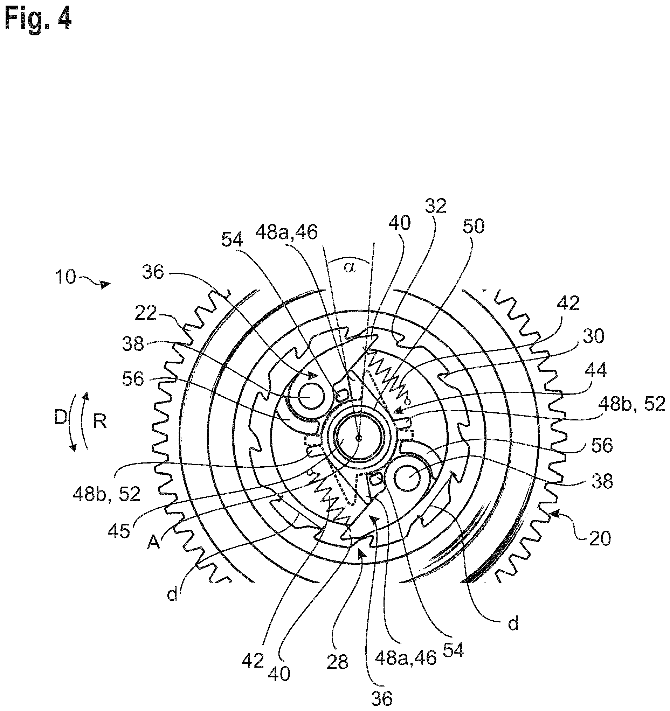

The first drive element 20 has a central opening 26. At a radial inner side of the opening 26, a clutch-side toothing 28 is formed comprising a plurality of distinct teeth 30 that are separated by a distance d from each other (see Figure 4).

All flanks 32 of the teeth 30 pointing in driving direction D (corresponding to a tensioning rotation direction of the first drive element 20) are inclined against the radial direction r so that some undercut results with regard to the driving direction D.

The clutch-side toothing 28 essentially lies in a plane with a face side 34 of the seat belt spool 18 perpendicular to the common rotation axis A.

On this face side 34, which is considered to be a part of the clutch 10 in this application, two pawls 36 are pivotally arranged. Each pawl 36 is mounted pivotally around a pivot axis 38 extending perpendicularly to the face side 34. The two pawls 36 are positioned so that both pivot axes 38 lie on a diameter of the face side 34 through the common rotation axis A.

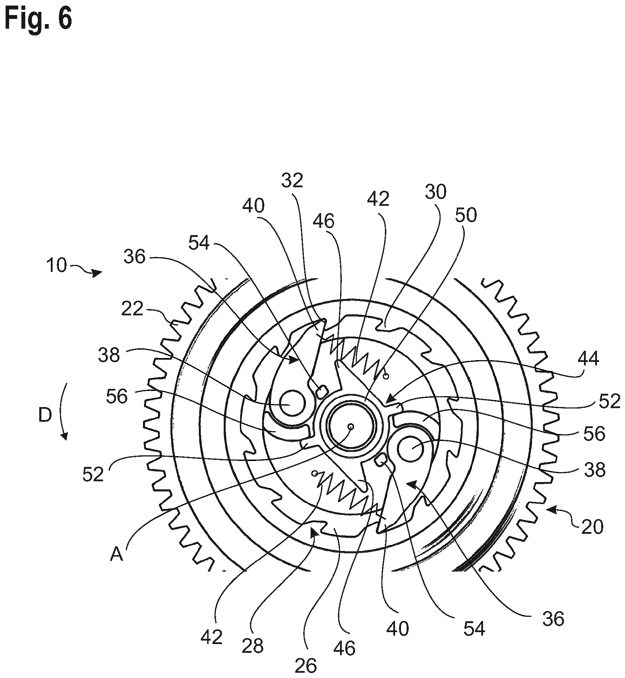

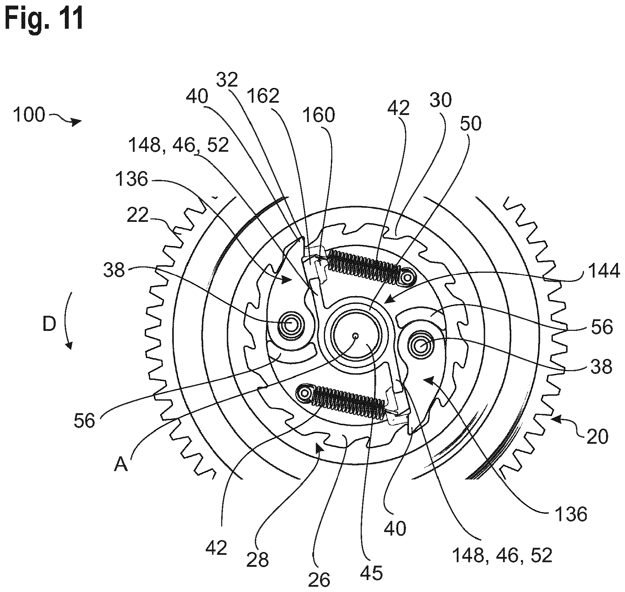

Each pawl 36 can assume a disengaged position (for instance shown in Figure 3 for the first embodiment and in Figure 8 for the second embodiment), and an engaged position (shown for instance in Figure 6 for the first embodiment and in Figure 11 for the second embodiment.)

Both pawls 36 are identical in form and function in this example. It would also be conceivable to use only one pawl 36 or use more than two pawls 36, for instance three pawls 36.

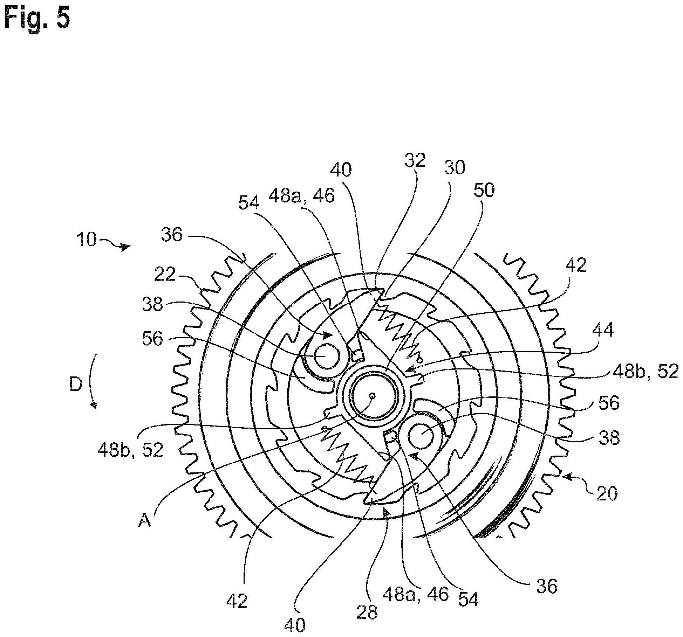

The pawl 36 has a free end that is not attached at the pivot axis 38 and that ends in a tip 40 configured to engage the clutch-side toothing 28 and to hook behind one of the teeth 30 on the inclined flank 32. This is shown for instance in Figures 5 and 6 and will be explained later in detail.

Each pawl 36 is connected by a spring 42 with the face side 34 of the seat belt spool 18, the spring 42 being configured so that it exerts a force acting towards the disengaged position of the pawl 36. In other words, the spring 42 pulls the tip 40 of the pawl radially inwards.

In the engaged position of the pawl 36, the spring 42 is tensioned more than in the disengaged position of the pawl 36.

However, the spring 42 provides a high enough force to keep the pawl 36 in the disengaged position against influences of gravitational and centrifugal forces arising during the normal operation of the seat belt system, such as pulling in and giving out seat belt webbing 19 by rotating the seat belt spool 18.

Further, a second drive element 44 is provided that is arranged coaxially with the common rotation axis A and in this example is positioned slidingly around a portion 45 of the seat belt spool axis extending along the common rotation axis A beyond the face side 34 (see Figure 2).

The second drive element 44 is connected to the second drive 16 in a way that the second drive 16 can rotate the second drive element 44 in driving direction D independently of the seat belt spool 18 and independently of the first drive element 20.

To move the pawl 36 from its disengaged position into its engaged position, the second drive element 44 has a pawl interaction portion 46 that is configured to push the pawl 36 radially outwards from its disengaged position when the second drive element 44 is rotated around the common rotation axis A relative to the face side 34 of the seat belt spool.

By this design, the clutch 10 can be closed independently of the operation of the first drive 14 used for tensioning the seat belt webbing.

The first and the second embodiment differ mainly by the form of the second drive element 44. Features, in which the second embodiment is different will be referred to with a reference number increased by 100 with regard to their counterparts of the first embodiment.

Closing and opening of the clutch 10 will now be described with regard to the first embodiment and the Figures 3 to 7.

In the first embodiment, the pawl interaction portion 46 is realized on a first protrusion 48a extending outwards from a central ring 50 enclosing a central opening 51 with which the second drive element 44 is put upon the protruding portion 45 of the seat belt spool axis.

The pawl interaction portion 46 is formed by the tip and a face of the first protrusion 48a facing the pawl 36. The tip of the first protrusion 48a lies against a radially inwardly directed flank 53 of the pawl 36 when the pawl 36 is in its disengaged position (see Figure 3).

Further, the second drive element 44 has a second protrusion 48b arranged in this example about 90° distanced along the circumference from the first protrusion 48a. The second protrusion 48b serves as a synchronization portion 52 to determine a relative rotational position between the second drive element 44 and the pawl 36, in particular the pivot axis 38 of the pawl 36.

On the face side 34 of the seat belt spool 18, two abutments 54, 56 are formed. The first abutment 54 lies beside the flank 53 of the pawl 36, and the flank 53 is in abutment with the first abutment 54 in its disengaged position and held against the pulling force of the spring 42.

The second abutment 56 is in contact with the synchronization portion 52 of the second drive element 44 in the disengaged position and so determines a relative angular position between the second drive element 44 and the pivot axis 38 of the pawl 36. The second abutment 56 is here arranged in driving direction D directly behind the pivotally attached end of each pawl 36.

As there are two pawls 36, the second drive element 44 in this example also comprises two first protrusions 48a and two second protrusions 48b so that for each pawl 36 a pawl interaction portion 46 and a synchronization portion 52 is provided. Of course, first and second abutments 54, 56 are also provided for each of the pawls 36.

The second drive element 44, therefore, can be described as a disk having the central opening 51 surrounded by the ring 50, from which radially extend two first protrusions 48a lying diametrically opposite to each other and, 90° rotated with regard to the first protrusions 48a, two second protrusions 48b, also extending radially outwards and lying diametrically opposite each other.

To close the clutch 10, the second drive element 44 is rotated by the second drive 16 in driving direction D for an angle α of about 5° to 30°. This is shown in Figure 4. In this Figure, the second drive element 44 is indicated in dashed lines in its starting position (compare Figure 3) and in continuous lines in its rotated position.

By rotating the second drive element 44 in driving direction D, the pawl interaction portion 46 pushes the pawl 36 from its disengaged position into its engaged position against the force of the spring 42. The tip 40 of the pawl 36 pivots radially outwards around the pivot axis 38. The second drive 16 keeps the second drive element 44 in this position for now.

The positions of the first and second drive elements 20, 44 are synchronized so that the tip 40 of the pawl 36 comes to lie in the engaged position of the pawl 36 between two adjacent teeth 30 of the clutch-side toothing 28 (see Figure 4). At this moment, the first drive 14 is still inactive and the first drive element 20 is not yet rotating.

In a next step, the first drive 14 is activated and the first drive element 20 starts to turn in driving direction D. The tooth 30 next to the tip 40 of the pawl 36 moves towards the pawl 36 so that the flank 32 of the tooth 30 comes into engagement with the tip 40 of the pawl 36. This situation is shown in Figure 5.

Due to the inclination of the flank 32 and of the flank 53 of the pawl 36, the pawl 36 cannot slip from this engagement as long as the first driving element 20 keeps turning in driving direction D.

As the pawl 36 is connected to the seat belt spool 18, the seat belt spool 18 is entrained in rotation with the first drive element 20, and seat belt webbing 19 is drawn in in a seat belt tensioning process.

The second drive 16 may be switched off at this time. In any way, the second drive 16 is configured so that it offers no resistance to the turning of the second drive element 44 in driving direction D.

The closing of the clutch 10 is completed by the second abutments 56 coming into contact with second protrusions 48b of the second drive element 44, as shown in Figure 6. Now, the second drive element 44 is entrained by the rotating seat belt spool 18.

The first drive 14 is active as long as the seat belt tensioning process continues.

The second abutments 56 can also serve as a load transfer mechanism. In that case, the pawls 36 is supported by the second abutments 56 to transfer the load from the first drive 14 by way of the first drive element 20 and the pawls 36 to the seat belt spool 18.

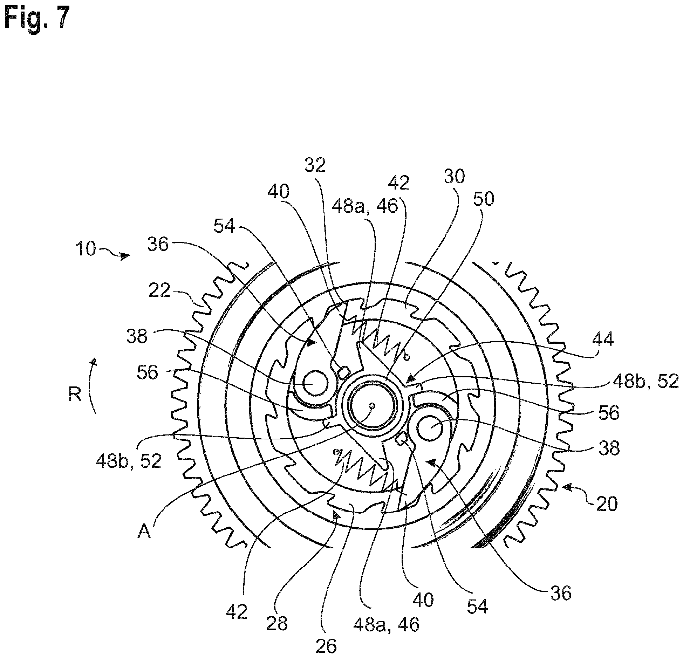

When the seat belt tensioning process is completed, and the clutch 10 is to be opened again, the first drive 14 is rotated in releasing direction R, in opposite direction to the driving direction D. This situation is shown in Figure 7.

As the tooth 30 that is in engagement with the tip 40 of the pawl 36 is now moved away from the non-rotating seat belt spool 18, the engagement is cancelled. Consequently, the spring 42 pulls the pawl 36 back into its disengaged position.

The pawl interaction portion 46 of the second drive element 44 is in this situation distanced from the flank 53 of the pawl 36. When the pawl 36 is pivoted radially inwards back into its disengaged position, it comes again into contact with the pawl interaction portion 46 and the abutment 54.

The second drive element 44 is already in its starting position. When the pawl 36 has reached its disengaged position, the flank 53 of pawl 36 is again in contact with the pawl interaction portion 46, and the second drive 16 can be activated to close the clutch 10 again.

The clutch 10 is also opened when a pyrotechnic drive 58 (schematically in Figure 1) activates in an actual crash situation.

The pyrotechnic drive 58 is connected with the seat belt spool 18 and, when activated, rotates the seat belt spool 18 in driving direction D to take up seat belt webbing and to tension the seat belt webbing 19. The rotation caused by the pyrotechnic drive 58 is faster by far than the rotation caused by the reversible first drive 14. Therefore, the seat belt spool 18 accelerates with regard to the first drive element 20, and the tip 40 of the pawl 36 is moved away in driving direction D from the tooth 30 of the clutch-side toothing 28 of the first drive element 20 and, therefore, out of engagement. The spring 42 pulls the pawl 36 back into its disengaged position, and the clutch 10 is opened.

Figures 8 to 11 show the second embodiment of the invention.

The basic design and operation of the clutch 10 according to the second embodiment is the same as in the previously described embodiment, therefore, only the differences will be explained in the following.

In this embodiment, the second drive element 44 only has one single protrusion 148 for each pawl 36. On this protrusion 148, both the pawl interaction portion 46 and the synchronization portion 52 are realized.

The pawl 36 has an angled protrusion 160 that forms a pocket 162 that is open at its radial inner end. The protrusion 148 is arranged so in the pocket 162 that it can slide in radial direction r, but stays connected to the pawl 36 in circumferential direction. The spring 42 is connected to the protrusion 160.

The clutch 10 can be activated independently of the first drive 14 that provides the tensioning force for the seat belt tensioning process.

To close the clutch 10, the second drive 16 is activated and turns the second drive element 44 in driving direction D and rotates it about the angle α of approximately 5° to 30°.

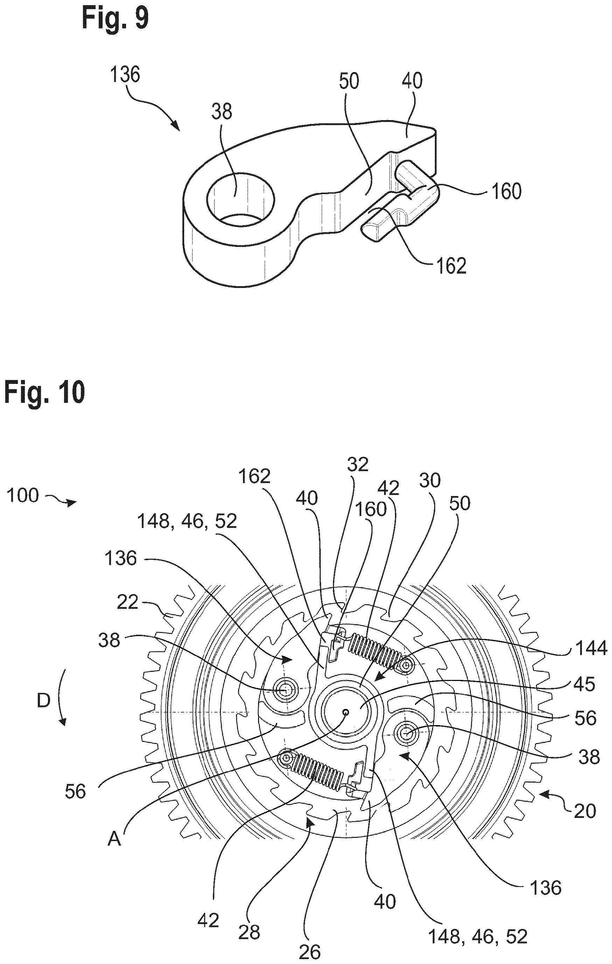

From the disengaged position shown in Figure 8, the pawl 36 is pivoted radially outwards into its engaged position, shown in two steps in Figures 10 and 11.

The protrusion 148 slides in the pocket 162 to adjust for the length difference caused by the pivoting of the pawl 36, while the pawl-side face of the protrusion 148 acts as the pawl interaction portion 46 and pushes the pawl 36 outwards.

Then, the first drive 14 is activated and the first drive element 20 starts to turn in driving direction D. The tooth 30 next to the tip 40 of the pawl 36 comes into contact with the pawl 36 and entrains the pawl 36 and, therefore, the seat belt spool 18. The clutch 10 is closed.

The spring 42 is tensioned by the pivoting of the pawl 36. However, as long as the first drive 14 is active and the first drive element 20 rotates in driving direction D, the pawl 36 stays engaged with the clutch-side toothing 28 of the first drive element 20. The second drive 16 may be stopped now.

To open the clutch 10, the first drive element 20 is rotated in release direction R by the first drive 14. As in the first embodiment, the tooth 30 of the clutch-side toothing 28 rotates away from the tip 40 of the pawl 36, and the spring 42 pulls the pawl 36 back into its disengaged position.

By the motion of the pawl 36, also the second drive element 44 is rotated back into its starting position. The pawl 36 pushes against the protrusion 148 that now acts as the synchronization portion 52 and, therefore, the angular positions of the first and second drive elements 20, 44 are synchronized.

The same situation occurs when the pyrotechnic drive 58 is activated. As the tip 40 of the pawl 36 is rotated away from the tooth 30 of the clutch-side toothing 28 behind which it was engaged, the spring 42 pulls the pawl 36 back into its disengaged position, and the clutch 10 is opened.

As in the first embodiment, two pawls 36 are provided, as well as two spring 42 and, correspondingly, the second drive element 44 has two protrusions 148 arranged at diametrically opposite portions on its central ring 50.

Of course, the second drive element 44 could be configured in any suitable way according to the knowledge of a person skilled in the art.

The concept to attach a spring directly to the pawl to reduce gravitational and centrifugal influences is also applicable in any other clutch, independently of the designs discussed here.

## Claims

1. A reversible seat belt tensioner in a vehicle, comprising a reversible first
drive (14) and a clutch (10), said clutch (10) having a first drive element (20) connected to the first drive (14) and adapted for being rotated in a driving direction (D) and in a releasing direction (R),
at least one pawl (36) arranged at a face side (34) of a seat belt spool (18), the pawl (36) being configured to engage a clutch-side toothing (28) on the first drive element (20) to couple the seat belt spool (18) with the first drive element (20), the pawl (36) being configured to assume a disengaged position in which the pawl (36) is not in engagement with the clutch-side toothing (28) on the first drive element (20) and an engaged position in which the pawl (36) is in engagement with the clutch-side toothing (28), **characterized in that**
a second drive element (44) is configured to interact with the pawl (36) so that a motion of the second drive element (44) moves the pawl (36) from its disengaged position into its engaged position,
the second drive element (44) being moveable independently of the rotation of the first drive element (20).

2. The reversible seat belt tensioner according to claim 1, **characterized in that** the second drive element (44) is configured to be coupled to a different second drive (16), the first and the second drive (14, 16) being configured so that they can be activated independently of each other.

3. The reversible seat belt tensioner according to any of the preceding claims, **characterized in that** the first drive element (20) and/or the second drive element (44) are arranged coaxially with a rotational axis (A) of the seat belt spool (18).

4. The reversible seat belt tensioner according to claim 3, **characterized in that** the first drive element (20) has a central opening (26), the clutch-side toothing (28) being provided at a radial inner side of the opening (26) and lying in one plane with the pawl (36).

5. The reversible seat belt tensioner according to any of the preceding claims, **characterized in that** the pawl (36) is coupled with a spring (42) attached at the seat belt spool (18), the spring (42) urging the pawl (36) towards its disengaged position.

6. The reversible seat belt tensioner according to claim 5, **characterized in that** the spring (42) is attached at the pawl (36) in the region of a free end of the pawl (36) that is moved radially outwards when the pawl (36) is moved into its engaged position.

7. The reversible seat belt tensioner according to any of the preceding claims, **characterized in that** the second drive element (44) rotates together with the seat belt spool (18) and the first drive element (20) when the clutch (10) is closed and the first drive element (20) is rotated in driving direction (D) and the pawl (36) is in its engaged position.

8. The reversible seat belt tensioner according to any of the preceding claims, **characterized in that** the second drive element (44) has a pawl interaction portion (46) that is configured to contact the pawl (36) to move the pawl (36) into its engaged position.

9. The reversible seat belt tensioner according to claim 8, **characterized in that** the second drive element (44) has a synchronization portion (52) that is configured to contact the pawl (36) or the seat belt spool (18) when the pawl (36) in its engaged position to keep the pawl (36) and the second drive element (44) in a predetermined relative angular position.

10. The reversible seat belt tensioner according to claim 9, **characterized in that** the second drive element (44) has a protrusion (148) extending radially outwards from the rotation axis (A) and that the pawl interaction portion (46) and the synchronization portion (52) are both formed on that protrusion (148).

11. The reversible seat belt tensioner according to any of claims 8 to 10, **characterized in that** the pawl interaction portion (46) on the second drive element (44) and the pawl (36) are configured so that the second drive element (44) rotates about an angle of 5° - 30° around the rotation axis (A) to move the pawl (36) from its disengaged position into its engaged position.

## Patentansprüche

1. Reversibler Gurtstraffer in einem Fahrzeug mit
einer reversiblen Antriebseinheit (14) und einer Kupplung (10), wobei die Kupplung (10) ein erstes Antriebselement (20) aufweist, das mit der ersten Antriebseinheit (14) verbunden ist und das in eine Antriebsrichtung (D) sowie eine Ausrückrichtung (R) drehbar ist,
mindestens einer Klinke (36), die an einer Frontseite (34) einer Gurtspule (18) angeordnet ist, wobei die Klinke (36) für den Eingriff mit einer kupplungsseitigen Verzahnung (28) an dem ersten Antriebselement (20) zur Kupplung der Gurtspule (18) mit dem ersten Antriebselement (20) ausgebildet ist, wobei die Klinke (36) zur Einnahme einer ausgesteuerten Stellung ausgebildet ist, in der die Klinke (36) nicht im Eingriff mit der kupplungsseitigen Verzahnung (28) an dem ersten Antriebselement (20) steht und einer eingesteuerten Stellung, in der die Klinke (36) im Eingriff mit der kupplungsseitigen Verzahnung (28) steht, **dadurch gekennzeichnet, dass**
ein zweites Antriebselement (44) ausgebildet ist, um mit der Klinke (36) zusammenzuwirken, sodass eine Bewegung des zweiten Antriebselements (44) die Klinke (36) aus ihrer ausgesteuerten Stellung in ihre eingesteuerte Stellung bewegt,
das zweite Antriebselement (44) unabhängig von der Drehung des ersten Antriebselements (20) bewegbar ist.

2. Reversibler Gurtstraffer nach Anspruch 1, **dadurch gekennzeichnet, dass** das zweite Antriebselement (44) zur Kupplung mit einer anderen zweiten Antriebseinheit (16) ausgebildet ist, wobei die erste und zweite Antriebseinheit (14, 16) so ausgebildet sind, dass sie unabhängig voneinander aktiviert werden können.

3. Reversibler Gurtstraffer nach einem der vorhergehenden Ansprüche, **dadurch gekennzeichnet, dass** das erste Antriebselement (20) und/oder das zweite Antriebselement (44) koaxial mit einer Rotationsachse (A) der Gurtspule (18) angeordnet ist/sind.

4. Reversibler Gurtstraffer nach Anspruch 3, **dadurch gekennzeichnet, dass** das erste Antriebselement (20) eine mittige Öffnung (26) aufweist, wobei die kupplungsseitige Verzahnung (28) an einer radialen Innenseite der Öffnung (26) vorgesehen ist und in einer Ebene mit der Klinke (36) liegt.

5. Reversibler Gurtstraffer nach einem der vorhergehenden Ansprüche, **dadurch gekennzeichnet, dass** die Klinke (36) mit einer Feder (42) gekoppelt ist, die an der Gurtspule (18) befestigt ist, wobei die Feder (42) die Klinke (36) in ihre ausgesteuerte Stellung drückt.

6. Reversibler Gurtstraffer nach Anspruch 5, **dadurch gekennzeichnet, dass** die Feder (42) an der Klinke (36) in dem Bereich eines freien Endes der Klinke (36) befestigt ist, das radial nach außen bewegt wird, wenn die Klinke (36) in ihre eingesteuerte Stellung bewegt wird.

7. Reversibler Gurtstraffer nach einem der vorhergehenden Ansprüche, **dadurch gekennzeichnet, dass** das zweite Antriebselement (44) sich zusammen mit der Gurtspule (18) und dem ersten Antriebselement (20) dreht, wenn die Kupplung (10) geschlossen ist und das erste Antriebselement (20) in Antriebsrichtung (D) gedreht wird und sich die Klinke (36) in ihrer eingesteuerten Stellung befindet.

8. Reversibler Gurtstraffer nach einem der vorhergehenden Ansprüche, **dadurch gekennzeichnet, dass** das zweite Antriebselement (44) einen mit der Klinke zusammenwirkenden Abschnitt (46) aufweist, der zur Kontaktierung der Klinke (36) ausgebildet ist, um die Klinke (36) in ihre eingesteuerte Stellung zu bewegen.

9. Reversibler Gurtstraffer nach Anspruch 8, **dadurch gekennzeichnet, dass** das zweite Antriebselement (44) einen Synchronisationsabschnitt (52) aufweist, der zur Kontaktierung der Klinke (36) oder der Gurtspule (18) ausgebildet ist, wenn sich die Klinke (36) in ihrer eingesteuerten Stellung befindet, um die Klinke (36) und das zweite Antriebselement (44) in einer vorgegebenen relativen Winkellage zu halten.

10. Reversibler Gurtstraffer nach Anspruch 9, **dadurch gekennzeichnet, dass** das zweite Antriebselement (44) einen Vorsprung (148) aufweist, der sich radial nach außen von der Drehachse (A) erstreckt und, dass der mit der Klinke zusammenwirkende Abschnitt (46) und der Synchronisationsabschnitt (52) beide an diesem Vorsprung (148) ausgebildet sind.

11. Reversibler Gurtstraffer nach einem der Ansprüche 8 bis 10, **dadurch gekennzeichnet, dass** der mit der Klinke zusammenwirkende Abschnitt (46) an dem zweiten Antriebselement (44) und die Klinke (36) so ausgebildet sind, dass das zweite Antriebselement (44) sich in einem Winkel von ca. 5° - 30° um die Drehachse (A) dreht, um die Klinke (36) aus ihrer ausgesteuerten Stellung in ihre eingesteuerte Stellung zu bewegen.

## Revendications

1. Rétracteur de ceinture de sécurité réversible dans un véhicule, comprenant
un premier entraînement réversible (14) et un embrayage (10), ledit embrayage (10) ayant un premier élément d'entraînement (20) relié au premier entraînement (14) et adapté pour être tourné dans un sens d'entraînement (D) et dans un sens de relâchement (R),
au moins un cliquet (36) disposé sur un côté frontal (34) d'une bobine de ceinture de sécurité (18), le cliquet (36) étant configuré pour engager une denture côté embrayage (28) sur le premier élément d'entraînement (20) pour coupler la bobine de ceinture de sécurité (18) avec le premier élément d'entraînement (20), le cliquet (36) étant configuré pour prendre une position désengagée dans laquelle le cliquet (36) n'est pas en prise avec la denture côté embrayage (28) sur le premier élément d'entraînement (20) et une position engagée dans laquelle le cliquet (36) est en prise avec la denture côté embrayage (28), **caractérisé en ce que**
un deuxième élément d'entraînement (44) est configuré pour interagir avec le cliquet (36) de sorte qu'un mouvement du deuxième élément d'entraînement (44) déplace le cliquet (36) de sa position désengagée à sa position engagée,
le deuxième élément d'entraînement (44) étant mobile indépendamment de la rotation du premier élément d'entraînement (20).

2. Rétracteur de ceinture de sécurité réversible selon la revendication 1, **caractérisé en ce que** le deuxième élément d'entraînement (44) est configuré pour être couplé à un deuxième entraînement différent (16), le premier et le deuxième entraînement (14, 16) étant configurés de manière à pouvoir être activés indépendamment l'un de l'autre.

3. Le rétracteur de ceinture de sécurité réversible selon l'une des revendications précédentes, **caractérisé en ce que** le premier élément d'entraînement (20) et/ou le deuxième élément d'entraînement (44) sont disposés coaxialement à un axe de rotation (A) de la bobine de ceinture de sécurité (18).

4. Rétracteur de ceinture de sécurité réversible selon la revendication 3, **caractérisé en ce que** le premier élément d'entraînement (20) présente une ouverture centrale (26), la denture (28) côté embrayage étant prévue sur un côté radial intérieur de l'ouverture (26) et se trouvant dans un plan commun avec le cliquet (36).

5. Rétracteur de ceinture de sécurité réversible selon l'une des revendications précédentes, **caractérisé en ce que** le cliquet (36) est couplé à un ressort (42) fixé à la bobine de la ceinture de sécurité (18), le ressort (42) poussant le cliquet (36) vers sa position désengagée.

6. Rétracteur de ceinture de sécurité réversible selon la revendication 5, **caractérisé en ce que** le ressort (42) est fixé au niveau du cliquet (36) dans la région d'une extrémité libre du cliquet (36) qui est déplacée radialement vers l'extérieur lorsque le cliquet (36) est déplacé dans sa position engagée.

7. Rétracteur de ceinture de sécurité réversible selon l'une des revendications précédentes, **caractérisé en ce que** le deuxième élément d'entraînement (44) tourne ensemble avec la bobine de la ceinture de sécurité (18) et le premier élément d'entraînement (20) lorsque l'embrayage (10) est fermé et que le premier élément d'entraînement (20) est tourné dans le sens de l'entraînement (D) et que le cliquet (36) est dans sa position engagée.

8. Rétracteur de ceinture de sécurité réversible selon l'une quelconque des revendications précédentes, **caractérisé en ce que** le second élément d'entraînement (44) comporte une portion en interaction avec le cliquet (46) qui est configurée pour entrer en contact avec le cliquet (36) afin de déplacer le cliquet (36) dans sa position engagée

9. Rétracteur de ceinture de sécurité réversible selon la revendication 8, **caractérisé en ce que** le second élément d'entraînement (44) comporte une portion de synchronisation (52) qui est configurée pour entrer en contact avec le cliquet (36) ou la bobine de ceinture de sécurité (18) lorsque le cliquet (36) est dans sa position engagée pour maintenir le cliquet (36) et le second élément d'entraînement (44) dans une position angulaire relative prédéterminée.

10. Rétracteur de ceinture de sécurité réversible selon la revendication 9, **caractérisé en ce que** le deuxième élément d'entraînement (44) présente une saillie (148) s'étendant radialement vers l'extérieur à partir de l'axe de rotation (A) et que la portion en interaction (46) avec cliquet et la partie de synchronisation (52) sont toutes deux formées sur cette saillie (148).

11. Rétracteur de ceinture de sécurité réversible selon l'une des revendications 8 à 10, **caractérisé en ce que** la portion en interaction avec le cliquet (46) sur le second élément d'entraînement (44) et le cliquet (36) sont configurés de telle sorte que le second élément d'entraînement (44) tourne autour d'un angle d'environ 5° à 30° autour de l'axe de rotation (A) pour déplacer le cliquet (36) de sa position désengagée à sa position engagée.
